(19) Europäisches Patentamt
European Patent Office
Office européen des brevets

(11) Veröffentlichungsnummer: **0 029 168**
**A1**

# (12) EUROPÄISCHE PATENTANMELDUNG

(21) Anmeldenummer: **80106794.3**

(22) Anmeldetag: **05.11.80**

(51) Int. Cl.$^{3}$: **C 08 F 226/02**, C 08 F 220/56, G 03 C 1/04 // (C08F226/02, 220/56),(C08F220/56, 226/02)

(30) Priorität: **17.11.79 DE 2946465**

(43) Veröffentlichungstag der Anmeldung: **27.05.81 Patentblatt 81/21**

(84) Benannte Vertragsstaaten: **BE CH DE FR GB LI**

(71) Anmelder: **AGFA-GEVAERT Aktiengesellschaft, Patentabteilung, D-5090 Leverkusen 1 (DE)**

(72) Erfinder: **Bergthaller, Peter, Dr., Wolfskaul 1, D-5000 Koeln 80 (DE)**
Erfinder: **Sommer, Helmut, Dr., Mühlenbach 42, D-5000 Koeln 1 (DE)**

## (54) Neue Polymere, Verfahren zu ihrer Herstellung und ihre Verwendung zur Herstellung fotografischer Emulsionen sowie fotografische Materialien.

(57) Die Erfindung betrifft neue Polymere, Verfahren zu ihrer Herstellung und ihre Verwendung zur Herstellung fotografischer Emulsionen sowie fotografische Materialien. Die Polymeren enthalten ein Copolymerisat aus einem Allylammoniumsalz, einem Monomeren mit wenigstens einer anionischen Gruppe und aus Acrylamid und/oder Methacrylamid.

EP 0 029 168 A1

AGFA-GEVAERT
AKTIENGESELLSCHAFT
Patentabteilung

D-5090 Leverkusen
Bundesrepublik Deutschland
Zb/bc/kl/c

# Neue Polymere, Verfahren zu ihrer Herstellung und ihre Verwendung zur Herstellung fotografischer Emulsionen sowie fotografische Materialien

Die vorliegende Erfindung betrifft neue Polymere, ein Verfahren für ihre Herstellung, ihre Verwendung bei der Herstellung fotografischer Emulsionen sowie fotografische Materialien mit einem Gehalt an den erfindungsgemäßen Polymeren.

Die Fällung fotografischer Silberhalogenidemulsionen wird im allgemeinen unter Verwendung von Gelatine als Peptisationsmittel durchgeführt. Gelatine weist ausgezeichnete Schutzkolloideigenschaften auf, ist zur reversiblen Gelbildung befähigt und wirkt beim fotografischen Elementarprozeß als Halogenakzeptor.

Bekanntlich ist die Verwendung von Gelatine aber auch mit Nachteilen verbunden. Gelatine ist als Naturprodukt nur schwer mit konstanter Qualität bezüglich der fotografisch wichtigen Eigenschaften herzustellen und ist gegen Angriffe durch Mikroben und Enzyme empfindlich. Bei höheren Temperaturen und vom Neutralpunkt stark abweichenden pH-Werten unterliegt sie außerdem einem rasch

fortschreitenden hydrolytischen Abbau. Somit sind bei der Verwendung von Gelatine Einschränkungen bei den Fällungsbedingungen von Emulsionen in Kauf zu nehmen. Darüber hinaus unterliegt Gelatine Dimensionsänderungen, wenn sie variierenden Temperatur- und Feuchtigkeitsverhältnissen ausgesetzt ist. Schließlich bedingt die Verwendung von Gelatine Einschränkungen in Bezug auf die erzielbaren kristallografischen und fotografischen Eigenschaften der Silberhalogenidkristalle, z.B. bezüglich der Kristallform, des Kristallwachstums und der Korngrößenverteilung.

Diese Nachteile haben vielfach zu Versuchen geführt, Gelatine ganz oder teilweise durch synthetische Peptisationsmittel zu ersetzen. So ist bekannt, daß Polyvinylpyrrolidon und Polyvinylalkohol als Schutzkolloid geeignet sind, sie aber in erheblichem Maße das Kornwachstum von Silberhalogenidkristallen hemmen. Copolymere von Acrylamid und dessen Derivaten sind in der US-PS 2 811 494 als Peptisationsmittel vorgeschlagen worden. Polyacrylamid selbst besitzt eine zu geringe Schutzkolloidwirkung. Zur Verbesserung der Schutzkolloidwirkung können entsprechende Copolyacrylamide mit Silberhalogenid-affinen Gruppen verwendet werden, die über spezielle Comonomere bei der Copolymerisation eingebaut werden.

Die Verwendung von thioethergruppenhaltigen Copolymerisaten als Peptisationsmittel für lichtempfindliche fotografische Silberhalogenidemulsionen ist aus der deutschen Offenlegungsschrift 1 904 147 und aus der

US-Patentschrift 3 860 42 bekannt.

Gelatine enthält demgegenüber nur sehr geringe Anteile an Thioethergruppen und verdankt ihre gute Schutzkolloidwirkung gegenüber Silberhalogenid im wesentlichen der Anwesenheit stickstoffhaltiger basischer Gruppen.

In der deutschen Offenlegungsschrift 2 506 405 werden Copolymere beschrieben, die Aminomethyloxy-alkylacrylat- bzw. -methacrylateinheiten als silbertragfähigkeitsvermittelnde Monomere enthalten. Die darin enthaltenen Aminogruppen sind von Dialkylaminen sowie gesättigten Aminheterocyklen abgeleitet und damit tertiär.

In der US-Patentschrift 3 084 132 werden Copolymere von Dimethylaminoethylmethacrylat oder Diethylaminoethylmethacrylat beschrieben. Auch in diesem Copolymerisat liegen ausschließlich tertiäre Aminogruppen vor.

In der US-Patentschrift 3 813 251 werden zwitterionische Copolymere von 1-Vinylimidazol und/oder 1-Vinyl-2-methylimidazol beschrieben, die sich durch einen Überschuß an sauren Monomereinheiten gegenüber den basischen Einheiten auszeichnen. In der deutschen Offenlegungsschrift werden Copolymere mit einem Gehalt an N-Acrylamidoalkyl-morpholin- oder N-Methacrylamidomorpholineinheiten beschrieben. Auch in diesen Copolymeren liegt ein Gerüst vor, das ausschließlich tertiäre Aminogruppen als basische Funktionen enthält.

Copolymere von Vinylamin sind zwar bekannt, aber nur schwierig in einer Form herzustellen, die eine fotografische Verwendung zuläßt. In diesem Zusammenhang kann auf den Artikel von Bloys van Treslong und Morra in Rec.Trav.Chim.Pays Bas 94, 5, Seite 101 ff (1975) verwiesen werden, ebenso auf R. Hart, Makromol.Chem. 32, 51 (1959).

Ein Herstellungsverfahren für Copolymere mit Allylamineinheiten wird in der US-PS 2 949 442 beschrieben. Dieses Verfahren ist aber technisch unbefriedigend.

Eine Aufgabe der Erfindung liegt darin, neue Polymere aufzufinden, die die Nachteile der bekannten Polymeren vermeiden. Insbesondere liegt der Erfindung die Aufgabe zugrunde, synthetische Peptisationsmittel für fotografische Silberhalogenidemulsionen aufzufinden, die die Gelatine, insbesondere bei der Fällung des Silberhalogenids, ganz oder teilweise zu ersetzen vermögen und deren Verwendung zu verbesserten fotografischen Eigenschaften der Silberhalogenidemulsionen führt. Insbesondere sollen die Entwickelbarkeit, die Lagerstabilität, die Unempfindlichkeit gegen Druckschleier und das Empfindlichkeits/Schleierverhältnis der Emulsion gegenüber einer mit Gelatine hergestellten Emulsion verbessert werden.

Es wurde nun gefunden:

1) Neue Copolymere, gekennzeichnet durch den Gehalt an einem Copolymerisat aus wenigstens folgenden Verbindungen:

1) aus einem Allylammoniumsalz der Formel A

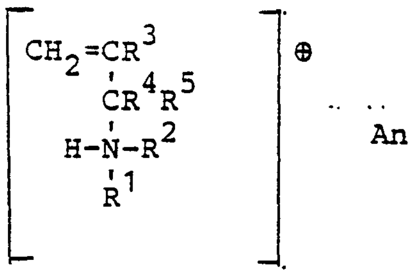

(A)

worin bedeuten:

$R^1$, $R^2$ gleich oder verschieden,

H; einen aliphatischen, araliphatischen oder cycloaliphatischen Rest mit vorzugsweise bis zu 20 C-Atomen, der gegebenenfalls substituiert sein kann insbesondere mit: OH, Alkoxyl mit 1 bis 12 C-Atomen, Aryloxygruppen mit 6 bis 10 C-Atomen, Acyloxygruppen mit 1 bis 12 C-Atomen, Acylaminogruppen mit 1 bis 12 C-Atomen, Alkyl- oder Arylureidogruppen mit 1 bis 12 C-Atomen, -COOH, $-CONH_2$-COO-Alkyl (mit 1 bis 12 C-Atomen), -CN, -Cl, -Br, $-SO_3^-$,

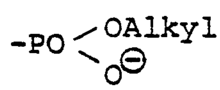

oder

$R^1$ und $R^2$ zusammen die Ringglieder zur Ergänzung eines 5-7 gliedrigen Ringes, insbesondere eines gegebenenfalls substituierten Pyrrolidons, Piperidins, Perhydroazepins, Morpholins oder Thiomorpholins

$R^3$, $R^4$, $R^5$ gleich oder verschieden; Wasserstoff, gegebenenfalls substituiertes Alkyl, insbesondere $C_1$-$C_4$, speziell Methyl

An Anion, insbesondere das Anion einer starken anorganischen oder organischen Säure, insbesondere $Cl^-$, Alkansulfonat, Arylsulfonat, Trifluoracetat, Perfluoralkanoat, Perfluoralkansulfonat oder die Sulfonatgruppe eines in copolymerisierter bzw. copolymerisierbarer Form vorliegenden Monomeren;

und/oder

$R^3$ der Rest $[-CR^5R^4-NR^1R^2H]^+$ An

2) aus einem Monomeren B mit mindestens einer anionischen Gruppe, vorzugsweise einem Monomeren der Formel:

$$CH_2=\overset{\overset{R^{10}}{|}}{\underset{\underset{CO-Y}{|}}{C}}$$

worin bedeuten

$R^{10}$ H; Alkyl, insbesondere $C_1$-$C_4$; gegebenenfalls mit einer Carboxyl-, Alkyloxycarbonyl oder gegebenenfalls einer substituierten Carbamoylgruppe substituierter Alkylrest, insbesondere: $CH_3$, $-C_2H_5$, $-CH_2-COOH$, $-CH_2-COO-R^{11}$ oder $-CH_2-CO-N\begin{matrix}R^{12}\\R^{13}\end{matrix}$

$R^{11}$ Alkyl mit 1 bis 12 C-Atomen, Alkoxyalkyl mit 1 bis 15 C-Atomen oder Rest eines Alkylpolyglykols mit der Formel

$R^{14}(O-C_2H_4)_m$

$R^{12}, R^{13}$ gleich oder ungleich H, Alkyl mit 1 bis 12 C-Atomen oder gemeinsam die zur Ergänzung eines Pyrrolidin-, Piperidin-, Morpholin-, Thiamorpholin-, 1-Alkylpiperazin- oder Perhydroazepinrestes erforderlichen Gruppen,

$R^{14}$ primäres Alkyl mit 1 bis 4 C-Atomen,

Y OH; gegebenenfalls mit einer löslichmachenden Gruppe, insbesondere einer COOH- oder $SO_3H$-Gruppe substituierter Alkoxy- oder Alkylaminorest, speziell mit 2 bis 8 C-Atomen im Alkylrest, speziell

$-O-C_2H_4-COOH$

$-O-C_2H_4-SO_3^{\ominus}$

$-NH-C_2H_4-SO_3^{\ominus}$

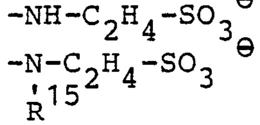

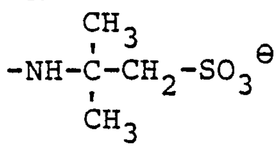

$-O(CH_2)_3SO_3^{\ominus}$

$-O(CH_2)_4SO_3^{\ominus}$

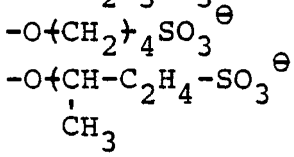

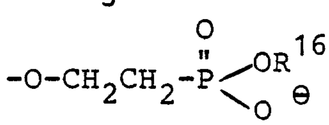

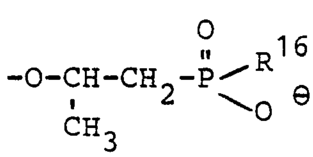

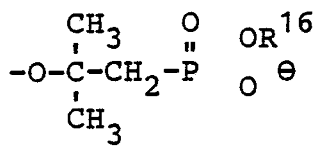

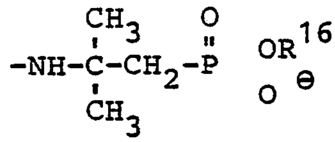

$R^{15}$ H, Alkyl mit 1 bis 4 C-Atomen,
$R^{16}$ H, Methyl, Ethyl, Chlorethyl,
m ganze Zahl, insbesondere 2 bis 10;

3) aus mindestens 40 Mol-%, vorzugsweise 40 bis 65 Mol-%, einer Verbindung C, welche Acrylamid und/oder Methacrylamid ist.

In einer bevorzugten Ausführungsform bedeuten:

$R^1$ H; Alkyl mit 1 bis 12 C-Atomen, gegebenenfalls durch eine Phenyl-, Alkoxy- oder anionische Gruppen, insbesondere durch eine Sulfogruppe substituiert; Allyl; Cyanethyl;
$R^2$, $R^3$, $R^4$, $R^5$ : Wasserstoff
$R^{10}$ H; Methyl;
Y OH;
An Chlorid, Sulfat, Methansulfonat, Benzolsulfonat, p-Toluolsulfonat, Methanphosphonat, Monoalkylmethanphosphonat, Trifluoracetat.

In einer bevorzugten Ausführungsform liegen, bezogen auf das gesamte Polymer, die polymerisierten Verbindungen A und B in folgenden molaren Verhältnissen vor:

Verbindung A: 5 bis 30 %, vorzugsweise 10 bis 20 %
Verbindung B: 10 bis 40 %, vorzugsweise 15 bis 30 %.

In einer besonders bevorzugten Ausführungsform sind in dem Copolymerisat polymerisierte Einheiten eines Alkylacrylates und/oder Methacrylates in einer Menge von 5 bis 25 Mol-%, bezogen auf das Polymer, mit 2 bis 8 C-Atomen im Alkylrest enthalten. Bevorzugt sind Butylacrylat und Ethylacrylat.

Die Copolymeren können zusätzlich weiter polymerisierte Einheiten aus Momomeren enthalten, die vorzugsweise nicht mehr als 20 Mol-% ausmachen. Für die Herstellung dieses nicht im einzelnen festgelegten Restes kommen beliebige ethylenisch ungesättigte Monomere in Frage. Bevorzugt werden jedoch:

N-Vinylimidazole, N-Vinylpyrazole, N-Vinyllactame, insbesondere 1-Vinylimidazol, 1-Vinyl-2-methylimidazol, 1-Vinyl-2-isopropylimidazol, 1-Vinyl-3,5-dimethylpyrazol, N-Vinylpyrrolidon, N-Vinylcaprolactam, N-Vinyl-N-ethylformamid, N-Vinyl-N-ethylacetamid sowie N-Vinyl-N-alkylamide einfacher aliphatischer Monocarbonsäuren in einem molaren Anteil von nicht mehr als 15 Mol-%, vorzugsweise weniger als 10 Mol-%, bezogen auf das Gesamtmonomer, Hydroxyalkylacrylate oder -methacrylate im Anteil von nicht mehr als 15 Mol-%,

- Acrylnitril oder Methacrylnitril im Anteil von nicht mehr als 5 Mol-%,
- Monomere mit 8-Oxychinolingruppen im Ausmaß von nicht mehr als 5 Mol-%, insbesondere

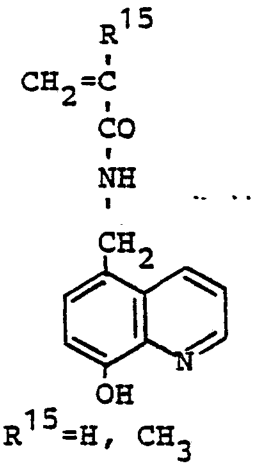

mit $R^{15}$=H, $CH_3$

- N-(Perfluoralkyl)methylacrylamide oder -methacrylamide im Ausmaß von nicht mehr als 5 Mol-%,
- die N-(3,6-Dithiaalkyl)amide folgender ungesättigter Carbonsäuren:

  Acrylsäure, Methacrylsäure, Itaconsäure, Crotonsäure in Anteilen von nicht mehr als 5 Mol-%,
- 2-Vinylpyridin, 4-Vinylpyridin, 2-Methyl-5-vinylpyridin in Anteilen von nicht mehr als 5 Mol-%,
- Vinylphosphonsäureester in Anteilen von nicht mehr als 10 Mol-%, bezogen auf Gesamtmonomer,
- die Vinylester einfacher aliphatischer Monocarbonsäuren,
- schließlich Dialkylester von Maleinsäure, Itaconsäure, Fumarsäure, Citraconsäure.

Besonders bevorzugte Verbindungen der Formel A sind:

Allylaminhydrochlorid, Allylammoniummethansulfonat, Allylammoniumtrifluoracetat, Allylammonium-benzolsulfonat, 3-Allylammoniopropansulfonat, 4-Allylammoniobutansulfonat, das Allylammoniumsalz der 2-Acrylamido-2-methylpropansulfonsäure, das Allylammoniumsalz der Methacryloyloxyethansulfonsäure, Allylammonium-methylphosphonat; N-Ethylallylammonium-ethylsulfat, Cyanethyl-ethylammoniumchlorid, N-Hydroxyethylallylammoniumchlorid, N-Allylmorpholiniumchlorid, Methallylammoniumchlorid, 2-Methylen-1,3-bis-alkylammoniumpropandichloride.

Besonders bevorzugte Verbindungen B sind:

Acrylsäure, Methacrylsäure, Itaconsäure, dimere Acrylsäure, Methacryloyloxy-ethansulfonsäure in Form eines Allylammonium oder eines Ammonium- oder Alkalisalzes, vorzugsweise in Form des Li-Salzes, 3-Acryloyloxypropansulfonsäure, bevorzugt als Li-Salz, 4-Acryloyloxybutansulfonsäure, bevorzugt als Li-Salz; N-Acryloyl-N-methyltaurin, N-Acryloyl-N-butyltaurin, bevorzugt in Form des Li-Salzes, schließlich 2-Acrylamido-2-methylpropansulfonsäure, bevorzugt als Allylammoniumsalz.

Weiterhin wurde gefunden:

2) Ein Verfahren zur Herstellung der erfindungsgemäßen Polymeren, bei dem man in Gegenwart von Polymerisationsinitiatoren und gegebenenfalls in Anwesenheit von Lösungsmitteln Verbindungen der Formeln A, B und C unter Polymerisation aufeinander einwirken läßt.

3) Die Verwendung der erfindungsgemäßen Polymeren als Peptisationsmittel bei der Herstellung von Silberhalogenidemulsionen, wobei die Polymeren die üblicherweise verwendete Gelatine ganz oder teilweise ersetzen können. Hierbei wird ein Silbersalz und ein Halogenid in Gegenwart des erfindungsgemäßen Polymeren unter Bildung eines Silberhalogenids umgesetzt. Die Herstellung kann erfolgen durch Fällung eines Silberhalogenids durch Umsetzung eines wasserlöslichen Silbersalzes, vorzugsweise $AgNO_3$, und eines wasserlöslichen Halogenids. Hierbei werden die Emulsionen anschließend an die Fällung gegebenenfalls gewaschen, redispergiert und chemisch gereift. Die Herstellung kann aber auch erfolgen durch Umlösung unter Bildung schwerer löslicher Silberhalogenidkörner aus leichter löslichen Silberhalogenidkörnern in Gegenwart der erfindungsgemäßen Polymeren.

4) Ein lichtempfindliches fotografisches Material aus einem Schichtträger und wenigstens einer lichtempfindlichen Silberhalogenidemulsionsschicht sowie gegebenenfalls weiteren Schichten, gekennzeichnet durch den Gehalt an wenigstens einem erfindungsgemäßen Polymeren. Vorzugsweise ist dieses in einer Silberhalogenidemulsionsschicht enthalten.

In den erfindungsgemäßen Polymeren sind wiederkehrende Einheiten der polymerisierten Verbindung A vorhanden, welche entweder in Salzform (Formel $A^{1)}$) oder in der Aminform (Formel $A^{2)}$) - in Abhängigkeit vom pH-Wert - vorliegen können:

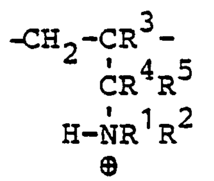

($A^{1)}$)

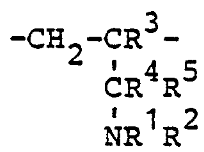

($A^{2)}$)

Hierbei kann der Substituent $R^3$ gegebenenfalls in der Salzform ($R^3 = CR^4R^5NR^1R^2H$) oder in der Aminform ($R^3 = -CR^4R^5-NR^1R^2$) auftreten.

Die radikalische Polymerisation der Monomeren erfolgt nach grundsätzlich bekannten Verfahren in Gegenwart von Polymerisationsinitiatoren. In diesem Zusammenhang ist zu verweisen auf Ian M.G. Cowie "Chemie und Physik der Polymeren", Seite 52, Verlag Chemie, Weinheim 1976; weiterhin auf das Kapitel "Auslösung der Polymerisation" in Houben-Weyl, Methoden der Organischen Chemie, Band XIV/1, Seite 209 bis 297.

Typische, für die Zwecke der Erfindung geeignete Inititatoren sind: Azoisobuyronitril, 2,2'-Azobis(2,4-dimethylvaleronitril), symmetrische Azo-bismercapto-Verbindungen gemäß der deutschen Offenlegungsschrift 25 18 622, Di-tert.-butylperoxid, tert.-Butylcumylperoxid, Dicumylperoxid, 4,4'-Di-tert.-butylperoxyvaleriansäure-n-butylester, tert.-Butylperacetat, ter.-Butylperpivalat, tert.-Butylperbenzoat, tert.-Butylperoxyisopropylcarbonat, tert.-Butylperoxy-2-ethylhexanoat, Diisopropylperoxydicarbonat, Dipropionylperoxid, Dioctanoylperoxid, Dilauroylperoxid, Dibenzoylperoxid, Dicyclohexylperoxydicarbonat, Wasserstoffperoxid, Peressigsäure, Monoperphthalsäure, Permaleinsäure. Die Art des verwendeten Initiators ist im wesentlichen von den gewählten Polymerisationsbedingungen und der Natur der verwendeten Monomeren abhängig.

Der optimale Initiator kann durch Vergleichsversuche leicht ermittelt werden. Die Konstitution der Phosphorverbindung hat auf die Auswahl des Initiators im allgemeinen keinen Einfluß.

Die Polymerisation wird als Fällungspolymerisation, vorzugsweise in einem alle Monomeren lösenden unter Rückfluß stehenden Lösungsmittel, durchgeführt. Die Polymerisationstemperatur kann in gewissem Umfang variiert werden, sie liegt in den meisten Fällen im Bereich zwischen 80 und 120°C. Als Polymerisationsmedien eignen sich wasserarme oder wasserfreie Lösungsmittel und Gemische. Folgende Lösungsmittel sind

bevorzugt: Methanol (in Abmischung mit höhersiedenden Lösungsmitteln), Ethanol, n-Propanol, Isopropanol, n-Butanol, Isobutanol, tert.-Butanol, Acetonitril, Propionitril, Ethylacetat, Butylacetat, 1,2-Dimethoxyethan, Dioxan, 2-Methoxyethanol, Dimethylsulfoxid, N-Methylpyrrolidon, Sulfolan, Essigsäure, Toluol, Chlorbenzol, o-Dichlorbenzol. Die schwach kettenübertragenden Eigenschaften einiger dieser Lösungsmittel wirken sich in vielen Fällen günstig aus, so daß die Bildung unlöslicher oder quellkörperhaltiger Polymerisate unterbunden wird.

Das mittlere Molekulargewicht der erfindungsgemäßen Copolymerisate liegt im allgemeinen im Bereich von etwa 10 000 bis 200 000. Als Peptisationsmittel sind insbesondere Copolymerisate mit einem mittleren Molekulargewicht von 20 000 bis 50 000 geeignet.

Bei der Herstellung der erfindungsgemäß als Peptisationsmittel für Silberhalogenid geeigneten Copolymeren können auch schwefelhaltige Verbindungen unter Einbau in das Polymergerüst zugesetzt werden.

Bevorzugt sind hierbei cyclische Disulfide der Formel I

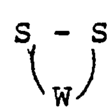

(I)

worin bedeutet

W 2-wertiger Kohlenwasserstoffrest, insbesondere Alkylen, speziell mit 1 bis 9 C-Atomen oder Arylen, speziell Phenylen oder ein Kohlenwasserstoffrest mit wenigstens einer Alkylen-Arylen-Gruppierung, wobei die Alkylen-, Arylen- oder Alkylen/Arylen-Gruppe gegebenenfalls unterbrochen sein kann durch wenigstens ein Heteroatom, insbesondere -O-, -S-, $-NR^{I}-$,

$R^{I}$ Alkyl, insbesondere mit 1 bis 8 C-Atomen; Acyl; Alkoxycarbonyl, insbesondere mit 1 bis 4 C-Atomen; Aminocarbonyl; Sulfonyl,

sowie Bisthiole der Formel II

$$HS-R^{II}-SH \qquad (II)$$

worin

$R^{II}$ ein zweiwertiger aliphatischer oder cycloaliphatischer Rest ist, der bevorzugt wenigstens 2 Thioethergruppen enthält.

In einer ganz besonders bevorzugten Ausführungsform erfolgt die Herstellung der Polymeren in Gegenwart einer Phosphorverbindung der Formel III

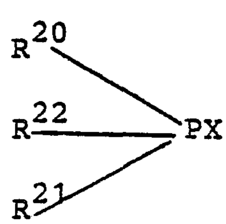

(III)

worin bedeuten

$R^{20}$,$R^{21}$ gleich oder verschieden; H; gegebenenfalls substituiertes Alkyl, insbesondere mit 1 bis 12, vorzugsweise mit 1 bis 4 C-Atomen; gegebenenfalls substituiertes Aryl, insbesondere Phenyl; Hydroxygruppe; Alkoxy, insbesondere mit 1 bis 12 C-Atomen; Aralkyl, insbesondere Benzyl; eine Aralkoxygruppe, insbesondere eine Benzyloxygruppe; oder $R^{20}$ und $R^{21}$ gemeinsam eine Gruppe $-O-R^{23}-O-$, worin $R^{23}$ ein gegebenenfalls substituierter Alkylenrest mit nicht mehr als 6 C-Atomen ist; Dialkylaminogruppe, wobei Alkyl insbesondere 1-4 C-Atome umfaßt; Cl

$R^{22}$ H; gegebenenfalls substituiertes Acyl, insbesondere von einer aliphatischen Carbonsäure mit 1 bis 20 C-Atomen oder von einer aromatischen Carbonsäure, speziell Acetyl, Pivaloyl, Butyryl, Benzoyl; Alkyl, insbesondere mit 1 bis 12 C-Atomen, Dialkylaminogruppe, wobei Alkyl insbesondere 1-4 C-Atome umfaßt; Cl

X einsames Elektronenpaar oder ein Sauerstoffatom, wobei X ein Elektronenpaar ist, wenn keiner der Reste $R^{20}$-$R^{22}$ = H ist.

In einer bevorzugten Ausführungsform liegt der Phosphor in der Oxidationsstufe + 3 vor.

Besonders bevorzugte Phosphorverbindungen sind, gegebenenfalls in Form der Salze:

Unterphosphorige Säure, phosphorige Säure, Phenylphosphorigsäure, Methylphosphorigsäure; die Alkylester, Aralkyl- oder Alkylenester der phosphorigen Säure, insbesondere in Form der Diester; die Alkylester der Phosphorigsäuren, z.B. der Phenylphosphorigsäure, schließlich die Phosphinoxide von sekundären Phosphinen. Die genannten Phosphorverbindungen können darüber hinaus auch in situ durch Solvolysereaktionen aus Vorstufen erzeugt werden, z.B. aus Chloriden, Esterchloriden, aus Phosphorigsäuretrialkylestern oder aus den Amiden der entsprechenden Säuren des Phosphors.

Die Rolle, die die Phosphorverbindungen der Formel III im Ablauf der Polymerisation spielen ist im einzelnen nicht bekannt. Es kann vermutet werden, daß die Phosphorverbindungen durch Reaktion mit dem Primärradikal, welches aus dem Zerfall des Initiators resultiert, in das Reaktionsgeschehen einbezogen werden und die eigentlichen Polymerisationsauslöser darstellen.

Außerdem wird durch die Gegenwart der Phosphorverbindungen gemäß Formel III oder ihrer Vorläufer, aus denen die eigentlich wirksamen Verbindungen III während der Polymerisation gebildet werden, die Wirkung von üblichen Polymerisationsreglern, z.B. von Isopropanol, nicht beeinträchtigt. Die Phosphorverbindung wird bei der Polymerisation in Mengenanteilen von 0,2 bis 5 Mol-%, bezogen auf den Monomeranteil des Ansatzes, zugesetzt oder aus dem Vorläufer gebildet.

Typische Vorläufer für Phosphorverbindungen sind: Phenyldichlorphosphin, Diphenylchlorphosphin, Triethylphosphit, Tetraethylpyrophosphit, Hexamethylphosphorigsäuretriamid, Diethylchlorphosphit oder Ethylenchlorphosphit, weiter Acylphosphonsäuredialkylester, z.B. der Methacryloylphosphonsäurediethylester (s. Kabachnik, Rossijskaja Jzv.Akad.SSSR 1965, S. 597).

Im folgenden wird das Verfahren zur Herstellung der erfindungsgemäßen Copolymeren anhand von Beispielen erläutert. Die Auswahl der Beispiele stellt keine Einschränkung dar.

Copolymer 1

Zu einer Lösung von 0,2 ml tert.-Butylperoctoat in 90 ml tert.-Butanol und 10 ml Chlorbenzol tropft man bei Rückflußtemperatur über 60 Minuten in einer $N_2$-Atmosphäre unter intensivem Rühren die Lösung von 42,6 g (0,6 Mol) Acrylamid, 12,8 g (0,1 Mol) Butylacrylat, 10,8 g (0,15 Mol) Acrylsäure, stabilisiert mit 0,1 % t-Butylhydrochinon, 14 g (0,15 Mol) Allylamin . HCl, 1,0 g Diethylphosphit in 400 ml t-Butanol und 40 ml Chlorbenzol.

Anschließend gibt man 0,2 ml t-Butylperoctoat nach und hält weitere 5 Stunden unter Rückfluß. Man läßt erkalten, saugt ab, wäscht mit Isopropanol und Ethylacetat nach und trocknet bei 60°C im Vakuum.
Ausbeute: 71 g (88 % der Theorie)
Analyse: Cl berechnet: 6,63 %
Cl gefunden: 6,0 %.

Copolymer 2

Man verfährt wie in Beispiel 1, jedoch mit dem Unterschied, daß die Monomerlösung wie folgt zusammengesetzt ist:
39 g Acrylamid (0,55 Mol), 12,8 g Butylacrylat (0,1 Mol), 17,2 g Methacrylsäure (0,2 Mol, frisch über KupferII-acetat destilliert, 14,0 g Allylammoniumchlorid, 1,5 g Diethylphosphit, 400 ml tert.-Butanol,

40 ml Chlorbenzol.
Ausbeute: 70 g (84 % der Theorie)
Analyse: Cl berechnet: 6,32 %
Cl gefunden: 5,5 %.

Copolymer 3-6

Man verfährt wie in Beispiel 2, jedoch mit dem Unterschied, daß anstelle von Diethylphosphit folgende Phosphorverbindungen eingesetzt werden:

| | Phosphorverbindungen | | Ausbeute | $Cl_{ber.}$ | $Cl_{gef.}$ |
|---|---|---|---|---|---|
| Copolymer 3: | 5g 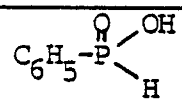 | (3 Mol-%) | 85 % d.Th. | 6,32 | 6,0 |
| Copolymer 4: | 1 ml 60 % $H_3PO_2$ | | 91 % d.Th. | 6,32 | 5,25 |
| Copolymer 5: | 4g 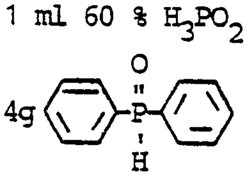 | (2 Mol-%) | 80 % d.Th. | 6,32 | 4,8 |
| Copolymer 6: | 3g 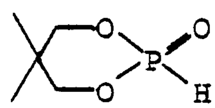 | | 88 % d.Th. | 6,32 | 6 |

Copolymer 8-10

Monomerzusammensetzung wie bei Copolymer 1; Herstellungsverfahren wie in Copolymer 1, jedoch mit dem Unterschied, daß als Initiatoren folgende Verbin-

dungen verwendet wurden:

| Copolymer | Initiator | Ausbeute | Cl ber. | Cl gef. |
|---|---|---|---|---|
| 8 | 1 g Azobisisobutyronitril | 85 % | 6,63 | 5,80 |
| 9 | 1 g Dibenzoylperoxid | 81 % | 6,63 | 6,05 |
| 10 | 1 g t-Butylperpivalat | 85 % | 6,63 | 5,75 |

Copolymer 11

Man verfährt wie in Beispiel 1, jedoch mit dem Unterschied, daß die Monomerlösung wie folgt zusammengesetzt ist:
53,3 g (75 Mol-%) Acrylamid, 7,2 g (10 Mol-%) Acrylsäure, 14,0 g (15 Mol-%) $C_3H_5NH_2$ . HCl, 2,8 g Diethylphosphit, 600 ml tert.-Butanol, 60 ml Chlorbenzol.
Ausbeute: 75 g (100 % der Theorie)
Cl berechnet: 7,17 %
Cl gefunden: 7,05 %.

Copolymer 12

Man verfährt wie in Beispiel 1, jedoch mit dem Unterschied, daß die Monomerlösung wie folgt zusammengesetzt ist:
46,1 g Acrylamid (65 Mol-%), 15,8 g Itaconsäuredimethylester (10 Mol-%), 13,4 g Itaconsäure (10 Mol-%), 14,0 g $C_3H_5NH_2$ . HCl (15 Mol-%, 1,5 g Diethylphosphit, 500 g tert.-Butanol, 50 g Chlorbenzol.
Ausbeute: 80 g (90 % der Theorie)
Cl berechnet: 5,97 %
Cl gefunden: 6,05 %.

Copolymer 13

Man verfährt wie in Beispiel 1, jedoch mit dem Unterschied, daß die Monomerlösung wie folgt zusammengesetzt ist:
39 g Acrylamid (55 Mol-%), 12,8 g Butylacrylat (10 Mol-%), 12,9 g Methacrylsäure (15 Mol-%), 8,15 g N-Methansulfonylmethacrylamid (5 Mol-%), 14,0 g $C_3H_5$-$NH_2$ · HCl (15 Mol-%), 2,8 g Diethylphosphit, 400 ml tert.-Butanol, 40 ml Chlorbenzol.
Ausbeute: 79 g (91 % der Theorie)
Analyse: S berechnet: 1,84 %
S gefunden: 1,5 %.

Copolymer 14

Man verfährt wie in Beispiel 1, jedoch mit dem Unterschied, daß die Monomerlösung wie folgt zusammengesetzt ist:
35,5 g Acrylamid (50 Mol-%), 25,6 g Butylacrylat (20 Mol-%), 31,1 g (2-Acrylamido-2-methylpropansulfonsäure (15 Mol-%), 8,5 g Allylamin (15 Mol-%), 1,5 g Diethylphosphit, 400 ml tert.-Butanol, 80 ml Chlorbenzol.
Ausbeute: 81 g /80 % der Theorie)
Analyse: S berechnet: 4,77 %
S gefunden: 5,0 %.

Copolymer 15

Man verfährt wie in Beispiel 14, jedoch mit dem Unterschied, daß Monomerlösung und Vorlage wie folgt zusammengesetzt sind:

Monomerlösung:
31,9 g (45 Mol-%) Acrylamid, 32,1 g (25 Mol-%) Butylacrylat, 31,1 g (15 Mol-%) 2-Acrylamido-2-methylpropansulfonsäure, 8,5 g (15 Mol-%) Allylamin, 400 ml Isopropanol, 250 ml Butylacetat, 2,8 g Diethylphosphit,
Vorlage:
200 ml Isopropanol, 1 g Azobisisobutyronitril.

Während der 5-stündigen Nachrührzeit werden stündlich je 0,2 g Azobisisobutyronitril nachgegeben.
Ausbeute: 72 g (70 % der Theorie).

Copolymer 16

Monomerlösung:
42,6 g (60 Mol-%) Acrylamid, 14,4 g (20 Mol-%) Acrylsäure, 42,4 g (20 Mol-%) N-Ethylallylammonium-ethylsulfat, 1,5 ml Diethylphosphit, 400 ml t-Butanol, 150 ml Chlorbenzol.
Volage:
0,4 ml t-Butylperoctoat in 150 ml Chlorbenzol.

Man tropft die Monomerlösung unter $N_2$-Atmosphäre der bei Rückfluß gerührten Vorlage innerhalb 2 Stunden zu. Während der 4-stündigen Nachheizzeit gibt man insgesamt je 0,4 ml t-Butylperoctoat und 0,4 ml Diethylphosphit nach. Man saugt ab, sobald die Temperatur beim Abkühlen auf 35°C gefallen ist, wäscht mit Ethylacetat nach und trocknet im Vakuum.
Ausbeute: 84 g (85 % der Theorie).

Copolymer 17 und Copolymer 18

Man verfährt wie in Beispiel 1, jedoch mit dem Unterschied, daß die Monomerlösungen wie folgt zusammengesetzt sind:

| | | |
|---|---|---|
| Copolymer 17 | 42,6 g (0,6 Mol) | Acrylamid |
| | 41,4 g (0,2 Mol) | 2-Acrylamido-2-methyl-propansulfonsäure |
| | 11,4 g (0,2 Mol) | Allylamin |
| | 1,4 g (0,01Mol) | Diethylphosphit. |
| Copolymer 18 | 42,6 g (0,6 Mol) | Acrylamid |
| | 41,4 g (0,2 Mol) | 2-Acrylamido-2-methyl-propansulfonsäure |
| | 11,4 g (0,2 Mol) | Allylamin. |

Die Lösungen enthalten weiterhin 450 ml t-Butanol und 50 ml Chlorbenzol.

Abweichend von Beispiel 1 wird als Initiator die Lösung von 0,8 g Azoisobutyronitril in 50 ml Chlorbenzol verwendet. Von dieser Lösung wird 1/3 vorgelegt, ein weiteres Drittel mit der Monomerlösung gleichzeitig und das letzte Drittel während der 5-stündigen Nachheizzeit zugetropft. Man erhält:

Copolymer 17 89 g (93 % der Theorie).
Copolymer 18 80 g (84 % der Theorie).

Copolymer 17 ist in 10 %iger wäßriger Natronlauge ohne Amingeruch löslich, enthält also kein freies Allylamin; Copolymer 18 geht dagegen in 10 %iger wäßriger Natronlauge unter Freisetzung von Allylamin (1,4 Milliäquivalent Allylamin pro 1 g Polymer) in Lösung und ist für fotografische Zwecke unbrauchbar.

Der Versuch zeigt die Überlegenheit der unter Verwendung von Phosphorverbindungen der Formel III hergestellten Copolymeren, in denen der Einbau der Allylammonium-Monomereinheiten vollständig erfolgt.

Copolymer 19

Man verfährt wie in Beispiel 15, jedoch mit dem Unterschied, daß die Monomerlösung wie folgt zusammengesetzt ist:
42,6 g (60 Mol-%) Acrylamid, 11,3 g (20 Mol-%) Allylamin, 41,5 g (20 Mol-%) 2-Acrylamido-2-methylpropansulfonsäure.
Ausbeute: quantitativ.

Copolymer 20

a) 1,3-Bis-ethylamino-2-methylenpropan:

Zu 1000 ml 40 %iger Ethylaminlösung und 500 ml Methanol tropft man unter Rückfluß 125 g 2-Chlormethyl-3-chlorpropen. Man hält noch 2 Stunden unter Rückfluß, dampft bis auf ein Volumen von 500 ml ein, stellt mit 80 g NaOH alkalisch und gibt zur Vervollständigung der Phasentrennung 300 ml gesättigte $K_2CO_3$-Lösung zu. Man trennt die Ölphase ab, trocknet mit $K_2CO_3$ und fraktioniert im Vakuum. Ausbeute: 100 g (70 % der Theorie) $Kp_{14mb}$: 73-77°C

b) Zur Herstellung des Hydrochlorids leitet man in eine auf 15° gekühlte Lösung von 14,2 g 1,3-Bisethylamino-2-methylenpropan in 100 ml t-Butanol HCl ein. Sobald die berechnete Menge aufgenommen ist, fällt man mit 300 ml Ethylacetat, kühlt auf 0°C ab und saugt ab. Ausbeute: 22 g folgender Verbindung:

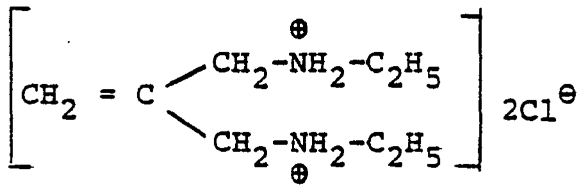

c) Zur Copolymerisation nimmt man 22 g (0,1 Mol) des Hydrochlorids, 20 g (0,1 Mol) Li-4-sulfobutylacrylat und 57 g (0,8 Mol) Acrylamid in 500 ml 2-Methoxyethanol auf. Die Monomerlösung wird gleichzeitig mit einer Lösung von 1,4 g Diethylphosphit und 0,5 ml t-Butylperoctoat in 100 ml Chlorbenzol innerhalb 1 Stunde einer unter Stickstoff auf Rückfluß gehaltenen Vorlage von 200 ml t-Butanol zudosiert. Die Rückflußtemperatur steigt allmählich auf 85°C an, während das Polymer als weißer Brei ausfällt. Man hält 4 Stunden auf Rückfluß, kühlt ab, saugt das Polymer ab, wäscht mit Ethylacetat nach und trocknet im Vakuum.

Ausbeute: 90 g Cl: gefunden $<0,2$ %

Bei Annahme einer zwitterionischen Struktur ist die Ausbeute quantitativ.

0029168

Copolymer 21

a) 4-Allylmorpholin

Zur Lösung von 200 g Morpholin in 400 ml Isopropanol tropft man unter Rückfluß 60 g Allylbromid. Man hält noch 4 Stunden unter Rückfluß, engt am Rotationsverdampfer ein und nimmt mit 100 ml 20 %iger NaOH auf. Man vervollständigt die Phasentrennung mit 20 g Kaliumcarbonat, trennt ab und destilliert nach Trocknung über KOH.

Ausbeute: 50 g

Zur Überführung ins Hydrochlorid löst man in 200 ml t-Butanol und leitet HCl bis zur Gewichtszunahme von 20 g ein. Man fällt das Hydrochlorid mit Chlorbenzol und nimmt es ohne Trocknung in t-Butanol auf.

b) Zur Copolymerisation tropft man eine aus der Hälfte der unter a) hergestellten Allylmorpholiniumchloridlösung (= 0,2 Mol) sowie 14,4 g Acrylsäure und 42,6 g Acrylamid in 500 ml t-Butanol hergestellte Monomerlösung gleichzeitig mit der Lösung von 0,5 ml t-Butylperoctoat und 1,4 g Diethylphosphit einer unter Stickstoff auf Rückfluß gehaltenen Vorlage von 200 ml t-Butanol und 100 ml Chlorbenzol zu. Nach 5 Stunden Polymerisationsdauer kühlt man auf Raumtemperatur ab, saugt ab, wäscht mit Ethylacetat nach und trocknet im Vakuum.
Ausbeute: 60 g (67 % d. Theorie).

Bei der Herstellung von fotografischen Silberhalogenidemulsionen werden die erfindungsgemäßen Polymeren vorzugsweise als Schutzkolloid bei der Fällung eingesetzt. Die eingesetzte Menge hängt von dem gewünschten Effekt ab und kann mit wenigen einfachen Versuchen in üblicher Weise ermittelt werden.

Die erfindungsgemäßen Verbindungen können in Mengen eingesetzt werden, die eine Steigerung der Empfindlichkeit bewirken. Das als Schutzkolloid bei der Fällung des Silberhalogenids verwendete Peptisationsmittel kann beispielsweise zu 10 bis 100 Gew.-% aus dem erfindungsgemäßen Polymer bestehen, wobei als restliches Peptisationsmittel Gelatine bevorzugt ist. Pro Mol zu fällendes Silberhalogenid werden von dem erfindungsgemäßen Polymeren im allgemeinen 5 bis 200 g, vorzugsweise 8 bis 40 g, verwendet. Im fertigen Material kann das Polymer in einer Menge von vorzugsweise 500 mg - 500 g pro Mol Silberhalogenid vorliegen.

Die erfindungsgemäßen Polymeren können in Form ihrer wäßrigen Lösung eingesetzt werden. Die Konzentration in dieser Lösung ist nicht kritisch und kann innerhalb weiter Grenzen schwanken. Vorzugsweise sind die Polymeren ausreichend wasserlöslich, um die Herstellung einer ausreichend konzentrierten wäßrigen Lösung zu ermöglichen. Es genügt beispielsweise bereits, eine 1 bis 5 %ige wäßrige Lösung einzusetzen. Selbstverständlich kann bei besonders gut löslichen Substanzen die Lösung auch konzentrierter sein.

Im allgemeinen werden die Lösungen mit einem pH von etwa 7 hergestellt. Es ist jedoch auch möglich, den

pH-Wert der Lösung schwach sauer zu halten, z.B. bei pH-Werten zwischen 5 und 7; bei sogenannten Ammoniakemulsionen können die pH-Werte der Lösung auch zwischen 7 und 9 liegen.

Die Herstellung der Emulsionen kann unter Verwendung von Peptisationsmitteln gemäß der Erfindung auf vielfache Weise erfolgen. Das Peptisationsmittel wird üblicherweise der Halogenidlösung zugegeben. Sofern carboxylatgruppenfreie Peptisationsmittel oder Silbersalzlösungen mit zusätzlichen Komplexbildnern verwendet werden, kann ein Teil des Peptisationsmittels auch der Silbersalzlösung zugegeben werden, ohne daß die Gefahr der Bildung von Schleierkeimen in Kauf genommen werden muß.

Die Silberhalogenidemulsionen können sowohl durch einfachen Einlauf als auch durch Doppeleinlauf hergestellt werden. Geeignete Verfahren dieser Art sind beispielsweise in der britischen Patentschrift 1 027 146 und in der Veröffentlichung von E. Moisar und S. Wagner in "Berichte der Bunsengesellschaft für physikalische Chemie", 67 (1963), Seiten 356 bis 359, beschrieben. Ebenso ist es möglich, durch Umlösung feinkörniger Ausgangsemulsionen in Gegenwart von Silberkomplexbildnern und in Gegenwart der erfindungsgemäßen Peptisationsmittel grobkörnigere Emulsionen herzustellen. Derartige Verfahren sind beispielsweise bekannt aus den US-Patentschriften 2 146 938, 3 206 313, 3 317 322 und der deutschen Auslegeschrift 1 207 791.

Erfindungsgemäß können grundsätzlich Emulsionen für die verschiedensten fotografischen Materialien hergestellt werden, wie z.B. negativ arbeitende Emulsionen mit hoher Oberflächenempfindlichkeit, negativ arbeitende Emulsionen mit hoher Innenempfindlichkeit, direkt positiv arbeitende Emulsionen, die oberflächlich verschleiert oder oberflächlich unverschleiert sein können, z.B. die aus den deutschen Offenlegungsschriften 2 224 837, 2 308 239 und 2 332 802 bekannten Emulsionen mit geschichtetem Kornaufbau, wie sie z.B. bekannt sind aus der Veröffentlichung von E. Moisar und S. Wagner in "Berichte der Bunsengesellschaft für physikalische Chemie", 67 (1963), 356-359, print-out Emulsionen, Umkehremulsionen, Emulsionen für Schwarzweiß- und für Colormaterialien sowie Emulsionen mit definierter Kornverteilung und Halogenidtopographie, insbesondere mit definiertem Halogenid, insbesondere Jodidgradienten. Auch Konvertemulsionen, die beispielsweise aus der US-PS 2 592 250 bekannt sind, können erfindungsgemäß hergestellt werden.

Die erfindungsgemäßen Silberhalogenidemulsionen können aus reinen Silberhalogeniden sowie aus Gemischen verschiedener Silberhalogenide bestehen. Beispielsweise können die Silberhalogenidkörner der Emulsionen aus Silberchlorid, Silberbromid, Silberjodid, Silberchloridbromid, Silberchloridjodid, Silberbromidjodid und Silberchloridbromidjodid bestehen.

Erfindungsgemäß können sowohl Emulsionen mit enger als auch mit relativ breiter Korngrößenverteilung ausgefällt werden. Insbesondere können erfindungsgemäß sowohl homodisperse als auch heterodisperse Silberhalogenidemulsionen hergestellt werden.

Unter homodispersen Emulsionen versteht man dabei solche mit enger Korngrößenverteilung; vorzugsweise haben dabei wenigstens 95 % der Silberhalogenidkörner einen Durchmesser, der nicht mehr als 40 %, oder vorzugsweise nicht mehr als 30 %, vom mittleren Korndurchmesser abweicht. Die Silberhalogenidkörner können eine beliebige der bekannten Formen, z.B. kubisch, oktaedrisch oder auch eine tetradekaedrische Mischform aufweisen.

Unter heterodispersen Emulsionen sind insbesondere solche zu verstehen, bei denen mindestens 10 %, vorzugsweise aber mindestens 20 %, der Silberhalogenidkörner einen Durchmesser haben, der zumindest um 40 % vom mittleren Korndurchmesser abweicht. Die Silberhalogenidkörner derartiger Emulsionen haben im allgemeinen eine irreguläre Form.

Die Silberhalogenidemulsionen können zur Entfernung der wasserlöslichen Salze entweder nach Zugabe von Gelatine in bekannter Weise erstarrt, genudelt und gewässert werden oder auch mit einem Koagulierungsmittel koaguliert und anschließend gewaschen werden, wie es beispielsweise aus der deutschen Offenlegungsschrift 2 614 862 bekannt ist.

Die fotografischen Materialien können mit üblichen Farbentwicklersubstanzen entwickelt werden, z.B. N,N-Dimethyl-p-phenylendiamin, 4-Amino-3-methyl-N-ethyl-N-methoxyethylanilin, 2-Amino-5-diethylaminotoluol, N-Butyl-N-$\omega$-sulfobutyl-p-phenylendiamin, 2-Amino-5-(n-ethyl-N-ß-methansulfonamidethyl-amino)-toluol, N-Ethyl-N-ß-hydroxyethyl-p-phenylendiamin, N,N-Bis-(ß-hydroxyethyl)-p-phenylendiamin, 2-Amino-5-(N-ethyl-N-ß-hydroxyethylamino)-toluol. Weitere brauchbare Farbentwickler sind beispielsweise beschrieben in J.Amer.Chem.Soc. 73, 3100 (1951).

Das fotografische Material kann die üblichen Farbkuppler enthalten, die den Silberhalogenidschichten selbst einverleibt sein können. Beispielhaft für verwendbare Farbkuppler sei auf die Veröffentlichung "Farbkuppler" von W. Pelz in "Mitteilungen aus den Forschungslaboratorien der Agfa, Leverkusen/München", Band III (1961) und K. Venkataraman in "The Chemistry of Synthetic Dyes", Vol. 4, 341 bis 387 Academic Press 1971, hingewiesen.

Weiterhin können 2-Äquivalentkuppler, beispielsweise die bekannten DIR-Kuppler, verwendet werden. Die Farbkuppler können den lichtempfindlichen Silberhalogenidemulsionen oder sonstigen Gießlösungen nach üblichen bekannten Methoden zugesetzt werden.

Soweit es sich bei den Farbkupplern um wasser- bzw. alkaliunlösliche Verbindungen handelt, können sie in bekannter Weise emulgiert werden. Gegebenenfalls verwendet man zur Einemulgierung derartiger hydrophober Verbindungen zusätzlich noch sogenannte Kupplerlösungsmittel oder Ölformer; verwiesen sei beispielsweise auf die US-Patentschriften 2 322 027, 2 533 514, 3 689 271, 3 764 336 und 3 765 897.

Als Bindemittel für die fotografischen Schichten wird vorzugsweise Gelatine verwendet. Diese kann jedoch ganz oder teilweise durch andere natürliche oder synthetische Bindemittel ersetzt werden.

Die Emulsionen können auch chemisch sensibilisiert werden, z.B. durch Zusatz schwefelhaltiger Verbindungen bei der chemischen Reifung, beispielsweise Allylisothiocyanat, Allylthioharnstoff und Natriumthiosulfat. Als chemische Sensibilisatoren können ferner auch Reduktionsmittel, z.B. die in den belgischen Patentschriften 493 464 oder 568 687, beschriebenen Zinnverbindungen, ferner Polyamine wie Diethylentriamin oder Aminomethylsulfinsäurederivate, z.B. gemäß der belgischen Patentschrift 547 323, verwendet werden. Geeignet als chemische Sensibilisatoren sind auch Edelmetalle bzw. Edelmetallverbindungen wie Gold, Platin, Palladium, Iridium, Ruthenium oder Rhodium. Es ist ferner möglich, die Emulsionen mit Polyalkylenoxidderivaten zu sensibilisieren, z.B. mit Polyethylenoxid eines Molekulargewichtes zwischen 1 000 und 20 000, ferner mit Kondensationsprodukten von Alkylenoxiden

und Alkoholen, aliphatischen Carbonsäuren, aliphatischen Aminen, aliphatischen Diaminen und Amiden.

Die Emulsionen können auch optisch sensibilisiert sein, z.B. mit den üblichen Polymethinfarbstoffen, wie Neutrocyaninen, basischen oder sauren Carbocyaninen, Rhodacyaninen, Hemicyaninen, Styrylfarbstoffen, Oxonolen und ähnlichen. Derartige Sensibilisatoren sind in dem Werk von F.M. Hamer "The Cyanine Dyes and related Compounds", (1964), beschrieben.

Die Emulsionen können die üblichen Stabilisatoren enthalten, wie z.B. homöopolare oder salzartige Verbindungen des Quecksilbers mit aromatischen oder heterocyclischen Ringen wie Mercaptotriazole, einfache Quecksilbersalze, Sulfoniumquecksilberdoppelsalze und andere Quecksilberverbindungen. Als Stabilisatoren sind ferner geeignet Azaindene, vorzugsweise Tetra- oder Pentaazaindene, insbesondere solche, die mit Hydroxyl- oder Aminogruppen substituiert sind. Derartige Verbindungen sind z.B. in dem Artikel von Birr, Z.Wiss.Phot. 47 (1952), 2 bis 58, beschrieben. Weitere geeignete Stabilisatoren sind u.a. heterocyclische Mercaptoverbindungen, z.B. Phenylmercaptotetrazol, quaternäre Benzthiazolderivate und Benzotriazol.

Die Schichten des fotografischen Materials können in der üblichen Weise gehärtet sein, beispielsweise mit Formaldehyd oder halogensubstituierten Aldehyden, die eine Carboxylgruppe enthalten, wie Mucobromsäure, Diketonen, Methansulfonsäureester, Dialdehyden und dergleichen. Weiterhin können die fotografischen Schichten

mit Härtern des Epoxidtyps, des heterocyclischen Ethylenimins oder des Acryloyltyps gehärtet werden. Weiterhin ist es auch möglich, die Schichten gemäß dem Verfahren der deutschen Offenlegungsschrift 2 218 009 zu härten, um farbfotografische Materialien zu erzielen, die für eine Hochtemperaturverarbeitung geeignet sind. Es ist ferner möglich, die fotografischen Schichten bzw. die farbfotografischen Mehrschichtenmaterialien mit Härtern der Diazin-, Triazin- oder 1,2-Dihydrochinolin-Reihe zu härten. Beispiele derartiger Härter sind Alkyl- oder Arylsulfonylgruppenhaltige Diazinderivate, Derivate von hydrierten Diazinen oder Triazinen, wie z.B. 1,3,5-Hexahydrotriazin, Fluor-substituierte Diazinderivate, wie z.B. Fluorpyrimidin, Ester von 2-substituierten 1,2-Dihydrochinolin- oder 1,2-Dihydroisochinolin-N-carbonsäuren. Brauchbar sind weiterhin Vinylsulfonsäurehärter, Carbodiimid- oder Carbamoylhärter, wie z.B. in den deutschen Offenlegungsschriften 2 263 602, 2 225 230 und 1 808 685, der französischen Patentschrift 1 491 807, der deutschen Patentschrift 872 153 und der DDR-Patentschrift 7218, beschrieben. Weitere brauchbare Härter sind beispielsweise in der britischen Patentschrift 1 268 550 beschrieben.

Anwendungsbeispiel 1

Herstellung einer Silberhalogenidemulsion vom Mikrat-Typ.

Folgende Lösungen werden hergestellt:

1) Halogenidlösung:

| | | |
|---|---|---|
| 4,9 | g | KBr |
| 0,12 | g | NaCl |
| 0,03 | g | KI |
| 10 | ml | einer 5 %igen wäßrigen Lösung der in Tabelle 1 angegebenen Polymeren. |

2) Silbernitratlösung:

| | | |
|---|---|---|
| 7,2 | g | $AgNO_3$ |
| 10 | ml | $H_2O$ |

Die jeweils auf 25°C temperierte $AgNO_3$-Lösung wird zur auf 25°C temperierten Halogenidlösung gekippt. Man wartet 1 Minute. Es bildet sich eine glatte Dispersion.

Man gibt 4 ml 5 %ige Inertgelatine und 4 ml 1 %ige Polystyrolsulfonsäure zu, stellt mit 10 %iger $H_2SO_4$ auf pH = 2, läßt 2 Minuten absitzen, dekantiert, wäscht 2 x mit je 100 ml Wasser nach. Man nimmt bei pH = 6 in 50 ml Wasser auf. Die Emulsion weist nach Ergebnissen einer Trübungsmessung die in folgender Tabelle 1 angegebenen Teilchengrößen auf:

Tabelle 1

| Polymer | Teilchengröße |
|---|---|
| 1 | ~ 0,05µ |
| 2 | ~ 0,05µ |
| 14 | < 0,04µ |
| 17 | < 0,05µ |
| 16 | ~ 0,06µ |

Anwendungsbeispiel 2

Herstellung von Silberbromid-jodid-emulsionen mit breiter Kornverteilung:

Von den Verbindungen 1 bis 18 werden 5 %ige Lösungen hergestellt und auf pH = 6,5 eingestellt.

Je 3,2 ml 5 %ige Polymerlösung werden je einer Lösung von 1,56 g $NH_4Br$, 0,12 g KJ in Wasser auf 10 ml zugegeben. Man erwärmt auf 65°C und tropft 20 ml 0,72-molarer $AgNO_3$-Lösung wie folgt zu:

1. 6,6 ml in 20 Sekunden, nach 5 Minuten Pause weitere

2. 6,6 ml in 8 Minuten und dann

3. 6,8 ml in 12 Minuten.

Man rührt bei 65°C 10 Minuten nach, gibt 5 ml 1 %ige Gelatinelösung und 1 ml 1 %ige Polystyrolsulfosäurelösung zu, stellt mit 10 %iger $H_2SO_4$ auf pH = 2,5, läßt das Flockulat absitzen, dekantiert, wäscht mit 20 ml Wasser, nimmt mit 25 ml Wasser auf und stellt auf pH = 6,5. Die Flockulate redispergieren einwandfrei und ohne Restagglomerat.

Anwendungsbeispiel 3

Herstellung feinkörniger AgBr-Emulsionen durch inverse Fällung

Jeweils 4 ml einer 5 %igen wäßrigen Lösung der Copolymeren 1, 2, 8, 14-16 werden mit 10 %iger Essigsäure auf pH = 2 gestellt. Man temperiert auf 50°C, gibt jeweils 20 ml 0,72 molare $AgNO_3$-Lösung zu und läßt innerhalb 5 Sekunden 10 ml 1,5-molare Ammoniumbromidlösung einlaufen (4 % Bromidüberschuß).

Die mittlere Korngröße beträgt ca. 0,1μ.

Nach Zugabe von 2 ml einer Bromid-Jodidlösung (0,31 g $NH_4Br$ und 0,024 g KJ in 10 ml) digeriert man jeweils 30 Minuten bei 60°C, wobei die mittlere Korngröße bis auf 0,4μ ansteigt. Man stellt mit NaOH auf pH 7,5, gibt 1 ml 10 %ige Gelatine und 2 ml 1 %ige Polystyrolsulfonsäure zu und flockt die Emulsion durch Einstellung des pH-Wertes mit 10 %iger $H_2SO_4$ auf pH = 2 aus.

Man wäscht das Flockulat 2 x mit Wasser von pH 2,0, gibt 10 ml 6 %iger Gelatine zu und redispergiert bei pH = 6,5. Die Flockulate redispergieren einwandfrei.

Anwendungsbeispiel 4

Probe 4.1 (Vergleich)

Zur Herstellung einer Silberbromidjodidgelatineemulsion werden folgende Lösungen bereitet:

| | | | |
|---|---|---|---|
| Lösung A) | 3000 ml | Wasser | |
| | 305 g | Ammoniumbromid | |
| | 25 g | Kaliumjodid | |
| | 48,0g | Inertgelatine | Temperatur 65°C |
| Lösung B) | 4800 ml | Wasser | |
| | 480 g | $AgNO_3$ | Temperatur 65°C |

Man gießt ein Drittel von Lösung B innerhalb einer Minute gleichmäßig in Lösung A, digeriert 10 Minuten bei 65°C und läßt dann den Rest von Lösung B innerhalb 30 Minuten bei 65°C zulaufen. Man kühlt dann auf 20°C ab, gibt 40 ml einer 10 %igen wäßrigen Polystyrolsulfonsäurelösung dazu und erniedrigt mit Schwefelsäure (25 %) den pH auf 3,0, wodurch die Emulsion ausflockt.

Man läßt absitzen und gießt die überstehende Lösung ab. Zur chemischen Reifung wird das Flockulat in 22 000 ml einer 10 %igen wäßrigen Gelatinelösung (pH 7,5) bei 40°C gelöst.

Nach Auflösen des Flockulates wird auf pH 6,5 eingestellt und eine entsprechende Menge an üblichen Schwefelreifungsmitteln und Goldsalzen hinzugefügt und bei 55°C bis auf volle Empfindlichkeit gereift. Die Emulsion wird pro kg mit 100 ml einer 5 %igen wäßrigen Lösung von Saponin, 100 ml einer 10 %igen wäßrigen Lösung von Formaldehyd und 220 ml einer 1 %igen methanolischen Lösung von 4-Hydroxy-6-methyl-1,3,3a,7-Tetraazainden versetzt und auf einen Celluloseacetatschichtträger vergossen. Nach Belichtung in einem üblichen Sensitometer hinter einem Stufenkeil und Entwicklung (7 und 16 Minuten bei 20°C) in einem Entwickler folgender Zusammensetzung:

| | |
|---|---|
| Natriumsulfit sicc. | 70,0 g |
| Borax | 7,0 g |
| Hydrochinon | 3,5 g |
| p-Monomethylaminophenol-Sulfat | 3,5 g |
| Natriumcitrat | 7,0 g |
| Kaliumbromid | 0,4 g |
| mit Wasser auf 1 l | |

wird sensitometrisch ausgewertet.

Probe 4.2-4.12, Erfindung

Bei diesen Emulsionsansätzen wird wie in Probe 4.1 verfahren, wobei jedoch die gesamte Gelatinemenge der Lösung A der Reihe nach durch jeweils 32 g der in Tabelle 2 angegebenen Polymeren ersetzt wird. Nach dem Fällen des Silberhalogenids werden 100 g Gelatine als 10 %ige wäßrige Lösung zugefügt, worauf die Emulsion mit Polystyrolsulfonsäure und durch Herabsetzen des pH mit Schwefelsäure auf 3,0 geflockt wird. Die weitere Behandlung erfolgt wie in Probe 4.1 beschrieben.

Tabelle 2

| Probe | Polymer-Nr. | frisches Material 7 min Entwicklung E | S | 16 min Entwicklung E | S | gelagertes Material 16 min Entwicklung E | S | $\sigma_{D=1,0}$ |
|---|---|---|---|---|---|---|---|---|
| 4.1 | (Gelatine) | 100 | 0,11 | 164 | 0,14 | 185 | 0,21 | 4,1 |
| 4.2 | 1 | 100 | 0,09 | 176 | 0,11 | 185 | 0,15 | 4,7 |
| 4.3 | 2 | 116 | 0,12 | 177 | 0,16 | 174 | 0,18 | 4,3 |
| 4.5 | 3 | 125 | 0,12 | 160 | 0,14 | 160 | 0,18 | 4,0 |
| 4.5 | 7 | 104 | 0,10 | 176 | 0,12 | 160 | 0,12 | 4,5 |
| 4.6 | 8 | 84 | 0,09 | 100 | 0,10 | 112 | 0,14 | 4,2 |
| 4.7 | 11 | 152 | 0,11 | 180 | 0,14 | 170 | 0,18 | 4,9 |
| 4.8 | 12 | 100 | 0,08 | 125 | 0,10 | 115 | 0,13 | 4,3 |
| 4.9 | 14 | 80 | 0,10 | 100 | 0,14 | 95 | 0,16 | 3,6 |
| 4.10 | 16 | 90 | 0,09 | 100 | 0,10 | 105 | 0,15 | 3,7 |
| 4.11 | 17 | 80 | 0,08 | 84 | 0,10 | 95 | 0,12 | 3,6 |
| 4.12 | 19 | 84 | 0,08 | 90 | 0,09 | 90 | 0,10 | 3,6 |

In Tabelle 2 bedeuten:

E: die relative Empfindlichkeit, bezogen auf den Typ mit 100 Einheiten; eine Verdoppelung von E entspricht einer Verdoppelung der Empfindlichkeit;

S: den Schleierwert;

D=1: die Körnigkeit, gemessen nach Altmann, Applied Optics 3,35 (1964) hinter einer Lochblende von 29µ Durchmesser (der dimensionslose Wert ist mit $10^{-2}$ zu multiplizieren).

Aus den Ergebnissen geht hervor, daß die mit den erfindungsgemäßen Polymeren hergestellten Emulsionen, verglichen mit der Probe 4.1, eine günstigere Körnigkeit aufweisen; bei gegenüber dem Gelatinetyp geringerer Empfindlichkeit sind die Körnigkeitsvorteile besonders deutlich.

Alle mit den erfindungsgemäßen Polymeren hergestellten Emulsionen zeigen bei Heizschranklagerung (72 Stunden bei 60°C und 40 % rel. Luftfeuchte) durchwegs geringeren Schleieranstieg ($\leq$0,05) als der Gelatinetyp.

Auch die Empfindlichkeitsänderungen $\Delta$E liegen im Absolutbetrag niedriger.

Patentansprüche

1) Copolymere, gekennzeichnet durch den Gehalt an einem Copolymerisat aus wenigstens folgenden Verbindungen:

1. aus einem Allylammoniumsalz der Formel A

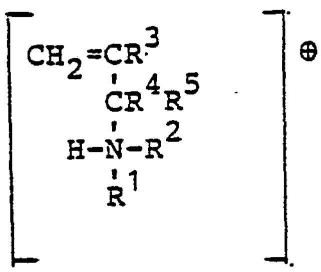

An (A)

worin bedeuten

$R^1$, $R^2$ gleich oder verschieden; Wasserstoff; einen aliphatischen, araliphatischen oder cycloaliphatischen Rest, der gegebenenfalls substituiert sein kann oder $R^1$ und $R^2$ zusammen den Rest zur Ergänzung eines 5-7 gliedrigen Ringes

$R^3$, $R^4$, $R^5$ gleich oder verschieden; Wasserstoff; gegebenenfalls substituierter Alkylrest,

An Anion

und/oder

$R^3$ den Rest $(-CR^5R^4-NR^1R^2H)^+$ An

2. aus einem Monomeren B mit wenigstens einer anionischen Gruppe;

3. aus wenigstens 40 Mol-% einer Verbindung C, welche Acrylamid und/oder Methacrylamid ist.

2) Copolymer nach Anspruch 1, dadurch gekennzeichnet, daß, bezogen auf das gesamte Polymer, der Anteil des Allylammoniumsalzes und der Anteil der Verbindung B jeweils 5 bis 30 Mol-% ausmacht und daß die Verbindung B folgender Formel entspricht:

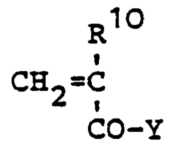

worin bedeuten

$R^{10}$ Wasserstoff; Alkyl; gegebenenfalls mit einer Carboxyl-, Alkyloxycarbonyl- oder einer gegebenenfalls substituierten Carbamoylgruppe substituierter Alkylrest,

Y OH; gegebenenfalls mit einer löslichmachenden Gruppe substituierter Alkoxy oder Alkylaminorest.

3) Polymer nach Anspruch 1, dadurch gekennzeichnet, daß bedeuten:

$R^1$ Wasserstoff; Alkyl mit 1 bis 12 C-Atomen; Allyl, Cyanethyl;

$R^2$ bis $R^5$ Wasserstoff,

$R^{10}$ Wasserstoff; Methyl,

Y OH,

An: Chlorid, Sulfat, Methansulfonat, Benzolsulfonat, p-Toluolsulfonat, Methanphosphonat, Monoalkylmethanphosphonat, Trifluoracetat.

4) Polymer nach Anspruch 1, dadurch gekennzeichnet, daß zusätzlich polymerisierte Einheiten eines Alkylacrylates und/oder Methacrylates in einer Menge von 5 bis 25 Mol-% enthalten sind.

5) Verfahren zur Herstellung eines Copolymeren gemäß Anspruch 1, dadurch gekennzeichnet, daß man die Verbindungen A, B und C unter Polymerisation in Gegenwart der folgenden Verbindung aufeinander einwirken läßt:

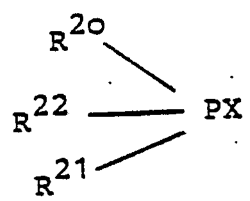

(III)

worin bedeuten:

$R^{20}$,$R^{21}$ gleich oder verschieden; Wasserstoff; gegebenenfalls substituiertes Alkyl oder Aryl; OH; Alkoxy; Aralkyl; oder $R^{20}$ und $R^{21}$ gemeinsam eine Gruppe $-O-R^{23}-O-$, worin $R^{23}$ ein gegebenenfalls substituierter Alkylenrest mit nicht mehr als 6 C-Atomen ist;

| | |
|---|---|
| $R^{22}$ | H; gegebenenfalls substituierter Acylrest; Alkyl, |
| X | einsames Elektronenpaar oder ein Sauerstoffatom, wobei X ein Elektronenpaar ist, wenn keiner der Reste $R^{20}$-$R^{22}$=H |

6) Verwendung der Copolymeren gemäß Anspruch 1 als Peptisationsmittel bei der Fällung einer fotografischen Silberhalogenidemulsion.

7) Fotografisches Material aus einem Träger und wenigstens einer lichtempfindlichen Silberhalogenidemulsionsschicht, gekennzeichnet durch den Gehalt an wenigstens einem Copolymeren gemäß Anspruch 1.

8) Fotografisches Material nach Anspruch 7, dadurch gekennzeichnet, daß das Copolymer ein Molekulargewicht von 10 000 bis 200 000 hat und das Polymerisat in einer Menge von 500 mg bis 500 g pro Mol Silberhalogenid enthalten ist.

9) Polymer nach Anspruch 1, dadurch gekennzeichnet, daß zusätzlich schwefelhaltige Verbindungen in dem Copolymer enthalten sind.

10) Copolymer nach Anspruch 1, dadurch gekennzeichnet, daß darin bedeuten:

Verbindung A:
Allylaminhydrochlorid;

Verbindung B:
Acrylsäure und/oder Methacrylsäure
und daß, bezogen auf das Polymer, 5 bis 25 Mol-% Butylacrylat in polymerisierter Form enthalten sind.

Europäisches Patentamt

# EUROPÄISCHER RECHERCHENBERICHT

0029168

Nummer der Anmeldung

EP 80 10 6794

| EINSCHLÄGIGE DOKUMENTE | | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | |
| D,A | DE - A - 2 506 405 (AGFA) | | C 08 F 226/02<br>C 08 F 220/56<br>G 03 C 1/04<br>//(C 08 F 226/02<br>220/56)<br>(C 08 F 220/56<br>226/02) |
| A | DE - A - 1 814 597 (CALGON CORP.) | | |
| | ---------- | | |

RECHERCHIERTE SACHGEBIETE (Int. Cl.³)

C 08 F 26/00-02
C 08 F 226/00-02
C 08 F 220/54/56
G 03 C 1/04

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| DEN HAAG | 25.02.1981 | CAUWENBERG |